# EUROPEAN PATENT SPECIFICATION

(11) **EP 4 571 146 B1**
(45) Date of publication and mention of the grant of the patent: **09.12.2026**
(21) Application number: 23852266.8
(22) Date of filing: 28.06.2023
(51) Int. Cl.: F16H 57/027

(54) **AIR BREATHER STRUCTURE**
ENTLÜFTUNGSSTRUKTUR
STRUCTURE DE RENIFLARD D'AIR

(30) Priority: 08.08.2022 JP 2022126640
(43) Date of publication of application: 18.06.2025
(73) Proprietor: Jatco Ltd., Shizuoka 417-8585 (JP); NISSAN MOTOR CO., LTD., Kanagawa 221-0023 (JP)
(72) Inventor: FUJII, Toshiyuki, Fuji-shi, Shizuoka 417-8585 (JP); IKEDA, Atsushi, Fuji-shi, Shizuoka 417-8585 (JP); YUMOTO, Yasuaki, Fuji-shi, Shizuoka 417-8585 (JP); OOMURA, Tomohiro, Fuji-shi, Shizuoka 417-8585 (JP); TSUCHIDA, Akira, Fuji-shi, Shizuoka 417-8585 (JP)
(74) Representative: Hoefer & Partner Patentanwälte mbB
(86) International application number: PCT/JP2023/023943
(87) International publication number: WO 2024/034283

(56) References cited:
- JP-A- 2006 300 094
- JP-A- 2007 321 928
- JP-A- 2007 321 928
- JP-A- 2008 014 406
- JP-A- 2008 014 406
- JP-A- H10 205 609
- JP-A- H10 325 456

## Description

### TECHNICAL FIELD

The present invention relates to a case comprising an air breather structure.

### BACKGROUND ART

Patent Document 1 discloses an air breather chamber formed by abutment of inner wall portions of both a converter housing and a transmission case. The air breather chamber communicates with the inside of a casing via an upper communication portion and a lower communication portion, and communicates with the atmosphere via an atmosphere communication hole.

### PRIOR ART DOCUMENT

### PATENT DOCUMENT

Patent Document 1: JPH10-205609A
Prior art document JP H10- 205 609 A describes an air breather structure that is configured to facilitate the return of lubricating oil to space outside an air breather chamber, even upon the entry of a large amount of the lubricating oil into the air breather chamber, and prevent the ingress of the lubricating oil into the air breather chamber as much as possible. A lower communication part communicated to an air breather chamber is provided under the upper communication part thereof and lubricating oil, even upon entry into the chamber via the upper communication part, smoothly flows out to space outside the chamber. Thus, a large amount of the lubricating oil does not stagnate in the chamber. According to this construction, the spouting of the lubricating oil residual in the chamber outside as in the conventional structure does not take place. Furthermore, the ingress of the lubricating oil into the chamber is prevented with a baffle part provided near the upper communication part.
Prior art document JP 2007- 321 928 A defines an air breather structure that is configures to trim down a transmission case by simplifying a complicated communicating structure in exhausting gas in the transmission case without jetting oil filled in the transmission case. This air breather structure of the transmission case comprises an air breather chamber having an inlet opened into the transmission case, near the mating faces of two cases forming the transmission case, and allowing the inlet to communicate with a through hole formed in the transmission case. The air breather chamber is provided with a barrier extending from a part, located behind the inlet, of a sidewall of the case toward the mating face with the other case. An oil inflow impeding region is formed between the barrier and the inlet, and a part of the sidewall of the case is brought close to the mating face with the case to form a side shifted sidewall. A narrow part allowing the oil inflow impeding region to communicate with a volume increase region is provided between the side shifted sidewall and the barrier.
Prior art document JP 2008- 014 406 A discloses an automatic transmission that is configures to supply efficiently oil separated by an air breather mechanism to a rotary body while preventing oil from reaching directly to an opening. A lower position of a case-side dropping opening which takes air bubbles containing oil in an air breather chamber is provided with a shielding rib sloping downward to a differential device. As a result, oil scooped up by the differential device can be prevented from reaching directly the case-side dropping opening to enter the air breather chamber and besides oil dropped from the case-side dropping opening can be supplied rapidly to the differential device by means of the slope of the shielding rib, thus improving lubricating ability for the differential device.

### SUMMARY OF INVENTION

### PROBLEMS TO BE SOLVED BY THE INVENTION

Since the inner wall portion of the case does not constitute a partition wall between an accommodating chamber of the case and the atmosphere, there is a case in which a space between mating surfaces of inner wall portions of two case members is not completely sealed by a seal member, for example, the space is not particularly sealed by the seal member. Therefore, a gap may be formed between the mating surfaces due to a dimension error, an assembly error, deformation, or the like. As a result, there is a possibility that in the air breather chamber formed by mating the inner wall portions of the two case members, oil enters from the accommodating chamber of the case through such a gap and is discharged to the atmosphere via a communication portion with the atmosphere provided in the air breather chamber.

The present invention has been made in view of such a problem, and an object of the present invention is to restrain the discharge of oil from an air breather chamber to the atmosphere.

### SOLUTIONS TO THE PROBLEMS

The object underlying the present invention is achieved by a case according to independent claim 1. Preferred embodiments are defined in the respective dependent claims.
A case according to an aspect of the present invention is provided with a first case member and a second case member that form an accommodating chamber in a state of being mated to each other. An air breather structure is provided and includes an air breather chamber that is formed as a cavity surrounded by mating a first inner wall portion as an inner wall portion of the first case member and a second inner wall portion as an inner wall portion of the second case member, and that is provided with a first communication portion communicating with the accommodating chamber and a second communication portion communicating with the atmosphere; and a defense chamber that is adjacent to the air breather chamber between the accommodating chamber and the air breather chamber, and that is formed as a cavity surrounded by mating the first inner wall portion and the second inner wall portion.
According to the present invention, the air flows from the defense chamber to the air breather chamber through a gap formed between mating surfaces of the inner wall potion of the first case member and the inner wall portion of the second case member, and the air breather chamber and the defense chamber do not communicate with each other through a hole communicating the air breather chamber with the defense chamber.

### ADVANTAGEOUS EFFECTS OF INVENTION

According to this aspect, since the defense chamber adjacent to the air breather chamber between the accommodating chamber and the air breather chamber is provided, the defense chamber serves to restrain the entry of the oil into the air breather chamber, and the entry of the oil into the air breather chamber becomes difficult. Further, even when the oil enters into the air breather chamber, the entered oil can be discharged to the accommodating chamber via the first communication portion. Therefore, it is possible to restrain the discharge of the oil from the air breather chamber to the atmosphere.

### BRIEF DESCRIPTION OF DRAWINGS

[FIG. 1] FIG. 1 is a schematic configuration diagram of a power transmission device.
[FIG. 2] FIG. 2 is a view of a case body when viewed from a housing side in an axial direction.
[FIG. 3] FIG. 3 is a view of a housing when viewed from a case body side in the axial direction.
[FIG. 4] FIG. 4 is an expanded view of a portion of an air breather structure provided in the case body.
[FIG. 5] FIG. 5 is an expanded view of a portion of the air breather structure provided in the housing.
[FIG. 6] FIG. 6 is an explanatory view of the air breather structure.
[FIG. 7] FIG. 7 is a diagram showing a first modification of the air breather structure.
[FIG. 8] FIG. 8 is a diagram showing a second modification of the air breather structure.

### DESCRIPTION OF EMBODIMENTS

Hereinafter, an embodiment of the present invention will be described with reference to the accompanying drawings.

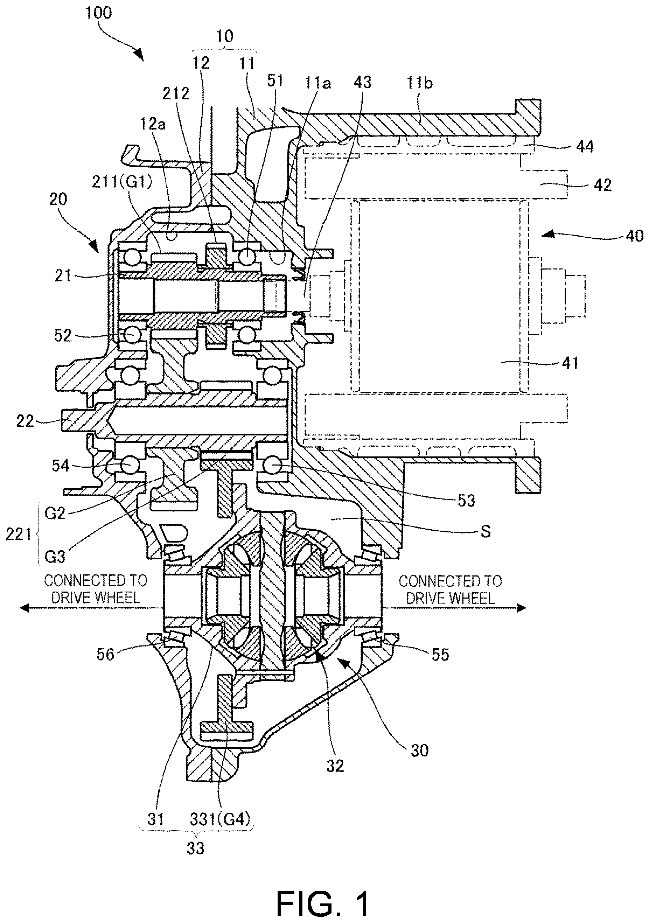

FIG. 1 is a schematic configuration diagram of a power transmission device 100 according to the present embodiment. In FIG. 1, a rotating electrical machine 40 is shown by a two-dot chain line. As shown in FIG. 1, the power transmission device 100 includes a case 10, a deceleration mechanism 20, and a differential gear 30. The power transmission device 100 is mounted on a vehicle. The vehicle is an electric vehicle using the rotating electrical machine 40 as a power source. The power transmission device 100 transmits power from the rotating electrical machine 40 to drive wheels. The power transmission device 100 can also transmit the power from the drive wheels to the rotating electrical machine 40.

The case 10 includes a case body 11 as a first case member and a housing 12 as a second case member. The case body 11 is provided on one side (right side in FIG. 1) in an axial direction, and the housing 12 is provided on the other side (left side in FIG. 1) in the axial direction. The axial direction is an extending direction of a shaft (power transmission shaft) of the power transmission device 100, and each of extending directions of a first shaft 21, a second shaft 22, and a third shaft 33 to be described later corresponds to the axial direction.

The case body 11 has an accommodating portion 11a, and the housing 12 has an accommodating portion 12a. The accommodating portion 11a opens toward the left side in FIG. 1, and the accommodating portion 12a opens toward the right side in FIG. 1. The housing 12 is provided in the case body 11, and closes an opening of the accommodating portion 11a with an opening of the accommodating portion 12a. A space formed by the accommodating portion 11a and the accommodating portion 12a constitutes an accommodating chamber S of the case 10. The accommodating chamber S is formed by mating the case body 11 and the housing 12 with each other.

The case body 11 further includes a cylindrical portion 11b. The cylindrical portion 11b is provided on the right side in FIG. 1 with respect to the accommodating portion 11a. The rotating electrical machine 40 is disposed in the cylindrical portion 11b. Therefore, the power transmission device 100 can be also understood as a configuration further including the rotating electrical machine 40. The rotating electrical machine 40 is fixed to an inner periphery of the cylindrical portion 11b.

The rotating electrical machine 40 includes a rotor 41, a stator 42, a rotary shaft 43, and a motor case 44. The rotor 41 is accommodated in the stator 42, and the stator 42 is fixed to the inner periphery of the cylindrical portion 11b via the motor case 44. The rotary shaft 43 protrudes into the accommodating portion 11a through a through hole penetrating a partition wall between the inside of the accommodating portion 11a and the inside of the cylindrical portion 11b, and a seal member is provided between the through hole and the rotary shaft 43. Therefore, the inside of the cylindrical portion 11b as a space in which the rotating electrical machine 40 is disposed is separated from the accommodating chamber S that is a space in which the deceleration mechanism 20 and the differential gear 30 are disposed, and does not constitute the accommodating chamber S.

The deceleration mechanism 20 is a gear mechanism, and includes the first shaft 21 and the second shaft 22. The first shaft 21 is connected to the rotating electrical machine 40. The first shaft 21 is connected to the rotating electrical machine 40 in a power transmittable manner. This connection may be connection performed via other configurations (for example, a clutch or another gear mechanism). In the present embodiment, the first shaft 21 is directly connected to the rotating electrical machine 40 by being directly connected to the rotary shaft 43. The phrase "the first shaft 21 is directly connected to the rotating electrical machine 40" means that the first shaft 21 is disposed on an axis of the rotating electrical machine 40 and is directly connected to the rotating electrical machine 40 without using a clutch or another gear mechanism.

The first shaft 21 includes a first gear portion 211. The first gear portion 211 is constituted by a first gear G1. The first gear portion 211 is integrally formed with the first shaft 21, and outputs the power from the rotating electrical machine 40. The first shaft 21 is shaft-supported on the case 10 by being supported by the case body 11 via a bearing 51 on one side in the axial direction and by being supported by the housing 12 via a bearing 52 on the other side in the axial direction. A park gear 212 is also provided on a portion of the first shaft 21 between the first gear portion 211 and the bearing 51. The first shaft 21 constitutes a first shaft of the power transmission device 100.

The second shaft 22 includes a second gear portion 221. The second gear portion 221 is constituted by a second gear G2 and a third gear G3. The second gear G2 is integrally formed with the second shaft 22 by press-fitting, and the third gear G3 is integrally formed with the second shaft 22. The third gear G3 is disposed on the right side of FIG. 1 with respect to the second gear G2, that is, on the side closer to the rotating electrical machine 40. The second gear G2 meshes with the first gear G1, and power is input from the first gear G1 to the second gear G2.

The power input to the second gear G2 is output from the third gear G3. Therefore, the second gear portion 221 receives the power from the first gear G1 and outputs the received power. The second gear G2 has a larger number of teeth than those of the first gear G1, and constitutes a first deceleration gear stage together with the first gear G1. The second shaft 22 is shaft-supported on the case 10 by being supported by the case body 11 via a bearing 53 on one side in the axial direction and by being supported by the housing 12 via a bearing 54 on the other side in the axial direction. The second shaft 22 constitutes a second shaft of the power transmission device 100.

The differential gear 30 is a differential gear mechanism, and includes a differential case 31, a fourth gear G4 as a final gear, and a differential portion 32. The differential case 31 is shaft-supported on the case 10 by being supported by a bearing 55 provided in the case body 11 and a bearing 56 provided in the housing 12. The fourth gear G4 is coaxially fixed to an outer wall portion of the differential case 31. The fourth gear G4 meshes with the third gear G3, and power is input to the fourth gear G4 from the third gear G3. The differential case 31 constitutes the third shaft 33 of the power transmission device 100 together with the fourth gear G4. The fourth gear G4 constitutes a third gear portion 331 of the third shaft 33.

The differential case 31 accommodates the differential portion 32, and the differential portion 32 distributes and outputs power input to the differential case 31 via the fourth gear G4 to the drive wheels in a left-right direction of the vehicle. Therefore, the fourth gear G4 as the third gear portion 331 is connected to the drive wheels via the differential case 31 and the differential portion 32, and transmits the input power to the drive wheels.

The fourth gear G4 has a larger number of teeth than those of the third gear G3, and constitutes a second deceleration gear stage together with the third gear G3. Therefore, in the power transmission device 100, deceleration in two stages is performed by the first gear G1 and the second gear G2, and the third gear G3 and the fourth gear G4.

An oil reservoir is formed in a lower portion of the case 10, and the fourth gear G4 is immersed in the oil reservoir. The fourth gear G4 scrapes up oil in the oil reservoir so as to scrap up and circulate the oil in the case 10. The fourth gear G4 is provided at a height at which at least a part thereof is immersed in the oil reservoir regardless of whether the device is being driven or stopped.

The power transmission device 100 is a power transmission device having a three-shaft configuration in which a total of three shafts, that is, the first shaft 21, the second shaft 22, and the third shaft 33, are disposed in the accommodating chamber S as the power transmission shafts. The shafts of the power transmission device 100 are implemented by a plurality of shafts that are sequentially connected from a radial direction by meshing of the gear portions.

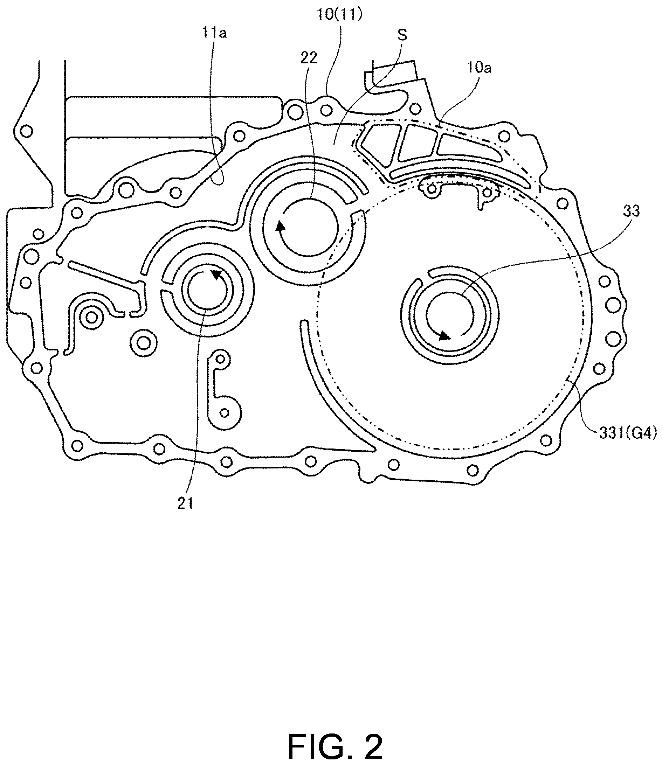

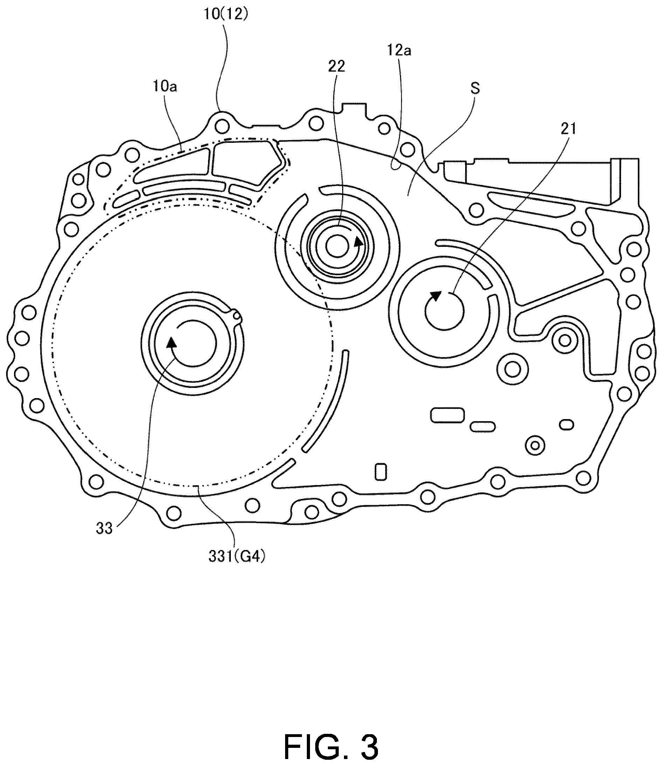

FIG. 2 is a view of the case body 11 when viewed from a housing 12 side in the axial direction. FIG. 3 is a view of the housing 12 when viewed from a case body 11 side in the axial direction. In FIGS. 2 and 3, the first shaft 21, the second shaft 22, and the third shaft 33 are schematically shown together by arrows indicating rotation directions. In FIGS. 2 and 3, the third gear portion 331 (therefore, the fourth gear G4) is indicated together by a two-dot chain line. In FIGS. 2 and 3, an up-down direction corresponds to the direction of gravity, and the left-right direction corresponds to a front-rear direction of the vehicle.

The case 10 has an air breather structure 10a. The air breather structure 10a is provided in the case 10, separates the air and the oil in the accommodating chamber S, and communicates with the atmosphere. The inside of the case 10 is formed as a space surrounded by an outer wall portion (a wall portion constituting an outer wall of the case 10) of the case 10, and the accommodating chamber S is separated as a space in which the deceleration mechanism 20 and the differential gear 30 are disposed in the case 10.

The air breather structure 10a is provided above and in the vicinity of the third shaft 33. The terms "above" and "below" refer to disposing that appears to overlap in the direction of gravity when viewed in a predetermined direction including the axial direction and the radial direction. For example, when a first element overlaps a second element in the direction of gravity when viewed in the axial direction, if a position of the first element is higher than that of the second element, the first element is above the second element. In this case, the first element and the second element may overlap each other or be offset when viewed in the radial direction.

The air breather structure 10a is provided above the third shaft 33 by having a portion overlapping with the third shaft 33 in the direction of gravity at a position higher than the third shaft 33, that is, an overlapped portion in the direction of gravity. The air breather structure 10a is provided within a range that does not protrude from the fourth gear G4 in the left-right direction of FIGS. 2 and 3. The air breather structure 10a is provided at a position higher than the fourth gear G4 of the third shaft 33 at each position in the left-right direction of FIGS. 2 and 3, so that the air breather structure 10a is provided at the position higher than the fourth gear G4 as a whole.

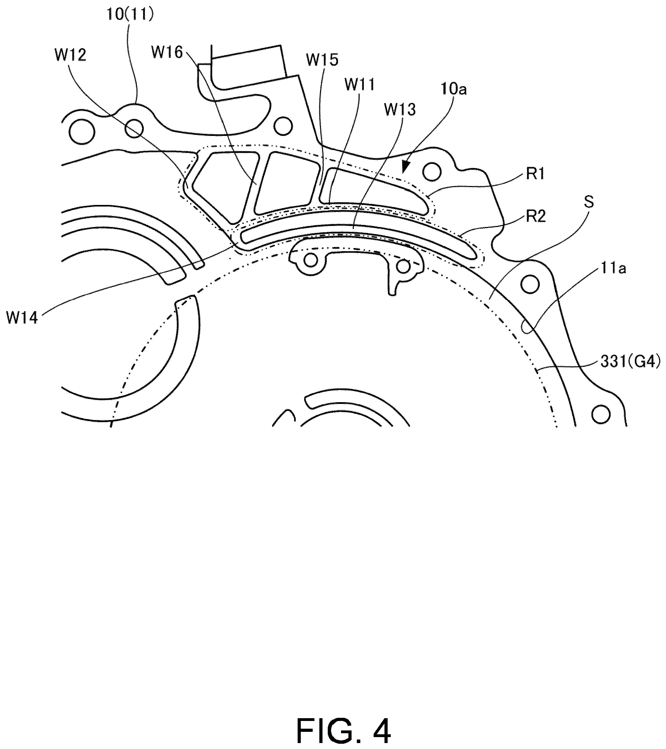

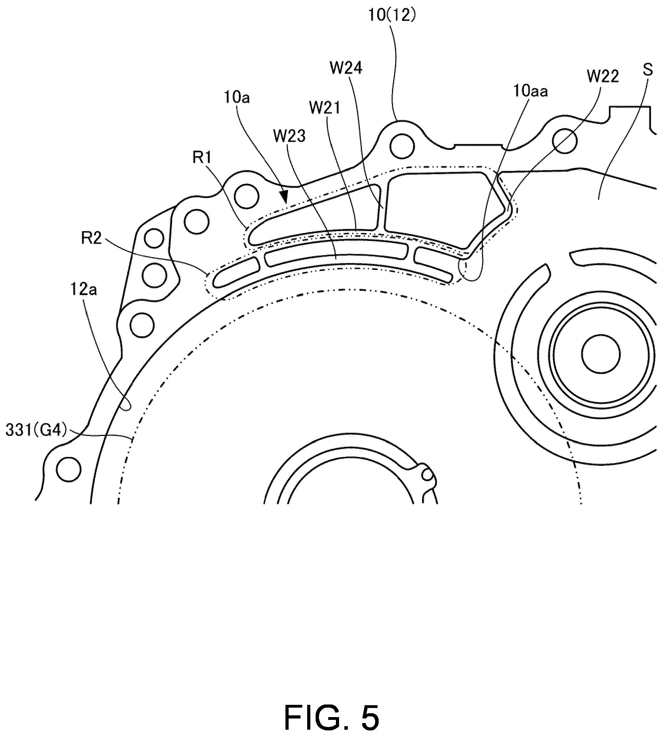

FIG. 4 is an expanded view of a portion of the air breather structure 10a provided in the case body 11 side. FIG. 5 is an expanded view of a portion of the air breather structure 10a provided in the housing 12 side. In FIGS. 4 and 5, the third gear portion 331 (therefore, the fourth gear G4) is indicated together by the two-dot chain line. In FIGS. 4 and 5, the up-down direction corresponds to the direction of gravity, and the left-right direction corresponds to the front-rear direction of the vehicle.

As shown in FIGS. 4 and 5, the air breather structure 10a includes an air breather chamber R1 and a defense chamber R2. In the air breather structure 10a, the air breather chamber R1 is divided on the upper side in the direction of gravity, and the defense chamber R2 is divided on the lower side in the direction of gravity. The defense chamber R2 provided in this way is adjacent to the air breather chamber R1 between the air breather chamber R1 and the accommodating chamber S. The defense chamber R2 is provided between the air breather chamber R1 and the fourth gear G4 provided in the accommodating chamber S, and thus the defense chamber R2 is provided on an inner side in the case 10 with respect to the air breather chamber R1. The defense chamber R2 is adjacent to the accommodating chamber S on a side (lower side in FIGS. 4 and 5) opposite to a side adjacent to the air breather chamber R1.

The air breather structure 10a includes an inner wall portion W11, an inner wall portion W21, an inner wall portion W12, and an inner wall portion W22. The air breather chamber R1 and the defense chamber R2 are vertically separated in the direction of gravity by the inner wall portion W11 and the inner wall portion W21, and are adjacent to each other across the inner wall portion W11 and the inner wall portion W21.

Each of the inner wall portion W11 and the inner wall portion W21 is connected to the outer wall portion of the case 10 at one end (the right side in FIG. 4 and the left side in FIG. 5) in the left-right direction in FIGS. 4 and 5. The inner wall portion W12 is connected to the other end (the left side in FIG. 4) of the inner wall portion W11 in the left-right direction in FIG. 4, and the inner wall portion W22 is connected to the other end (the right side in FIG. 5) of the inner wall portion W21 in the left-right direction in FIG. 5. The inner wall portion W12 extends upward from a connection portion with the inner wall portion W11 and is connected to the outer wall portion of the case 10, and the inner wall portion W22 extends upward from a connection portion with the inner wall portion W21 and is connected to the outer wall portion of the case 10.

The air breather chamber R1 is formed as a cavity surrounded by mating the inner wall portion W11 and the inner wall portion W21 and mating the inner wall portion W12 and the inner wall portion W22, that is, by abutting the above. The inner wall portion W11 and the inner wall portion W21 constitute a partition wall that separates the air breather chamber R1 and the defense chamber R2 in a state in which the case body 11 and the housing 12 are mated with each other. The inner wall portion W12 and the inner wall portion W22 constitute a partition wall that separates the air breather chamber R1 and the accommodating chamber S in the state in which the case body 11 and the housing 12 are mated with each other.

The air breather chamber R1 is formed as a cavity surrounded by the outer wall portion of the case 10 other than the inner wall portion W11, the inner wall portion W12, the inner wall portion W21, and the inner wall portion W22. A wall portion of the air breather chamber R1 located in the left-right direction of the vehicle (the axial direction of the fourth gear G4) is constituted by the outer wall portion of the case 10. The outer wall portion of the case 10 constituting the air breather chamber R1 constitutes a partition wall that separates the air breather chamber R1 from the atmosphere.

The inner wall portion W11 and the inner wall portion W21, and the inner wall portion W12 and the inner wall portion W22 constitute air breather forming portions that form the air breather chamber R1. Therefore, in other words, the air breather chamber R1 is formed as a cavity surrounded by the air breather forming portions. The fact that the air breather structure 10a has the air breather chamber R1 is synonymous with the fact that the air breather structure 10a has the air breather forming portions, and the same applies to the defense chamber R2 and the accommodating chamber S. The air breather forming portion, defense chamber forming portions that form the defense chamber R2, and accommodating chamber forming portions that form the accommodating chamber S, can be implemented by the wall portion of the case 10.

The air breather structure 10a further includes an inner wall portion W13, an inner wall portion W23, and an inner wall portion W14. The inner wall portion W13 and the inner wall portion W23 constitute a lower wall portion of the air breather structure 10a, and also constitute a lower wall portion of the defense chamber R2. The lower wall portion of the defense chamber R2 constitutes a facing wall portion that faces a tooth flank of the fourth gear G4 scrapping up the oil. The tooth flank of the fourth gear G4 is set to an outer peripheral surface of the fourth gear G4 (surface formed on an outer periphery of the fourth gear G4 by respective gear teeth of the fourth gear G4).

Each of the inner wall portion W13, the inner wall portion W23, the inner wall portion W11, and the inner wall portion W21 has a shape curved along the third shaft 33. The curved shape is a shape along the fourth gear G4 as a maximum outer diameter portion of the third shaft 33. The air breather structure 10a is provided to have, for example, such a curved shape with respect to the third shaft 33, and is accordingly provided as close to the third shaft 33 as possible, and thus the air breather structure 10a is provided in the vicinity of the third shaft 33.

Each of the inner wall portion W13 and the inner wall portion W23 is connected to the outer wall portion of the case 10 at one end (the right side in FIG. 4 and the left side in FIG. 5) in the left-right direction in FIGS. 4 and 5. The inner wall portion W14 is connected to the other end (the left side in FIG. 4) of the inner wall portion W13 in the left-right direction in FIG. 4. The inner wall portion W14 extends upward from a connection portion with the inner wall portion W13 and is connected to the inner wall portion W11. The inner wall portion W14 is connected to the inner wall portion W11 and the inner wall portion W12 by being connected to the connection portion between the inner wall portion W11 and the inner wall portion W12.

The inner wall portion W23 is not connected to the inner wall portion W21 on the other side (the right side in FIG. 5), and forms a discharge hole 10aa of the defense chamber R2 between the inner wall portion W23 and the inner wall portion W21. The discharge hole 10aa is provided in the housing 12 and is formed by not connecting the other ends of the inner wall portion W21 and the inner wall portion W23. The discharge hole 10aa formed in this way is provided in the defense chamber R2, and allows the defense chamber R2 to communicate with the accommodating chamber S. The discharge hole 10aa may be formed by, for example, connecting the other ends of the inner wall portion W21 and the inner wall portion W23 at the inner wall portion and being provided at the inner wall portion.

The discharge hole 10aa opens to the accommodating chamber S at a position in which the discharge hole 10aa does not face the tooth flank of the fourth gear G4. Therefore, the discharge hole 10aa is not provided at the inner wall portion W23 facing the tooth flank of the fourth gear G4. The discharge hole 10aa may be provided in the case body 11 (for example, the inner wall portion W14). The fourth gear G4 corresponds to a gear.

The defense chamber R2 is formed as a cavity surrounded by mating the inner wall portion W13 and the inner wall portion W23. The inner wall portion W13 and the inner wall portion W23 constitute a partition wall that separates the defense chamber R2 and the accommodating chamber S in the state in which the case body 11 and the housing 12 are mated with each other.

The defense chamber R2 is formed as a cavity surrounded by the inner wall portion W11 and the inner wall portion W21, and the inner wall portion W14 and the outer wall portion of the case 10 other than the inner wall portion W13 and the inner wall portion W23. The inner wall portion W14 constitutes a partition wall that separates the defense chamber R2 and the accommodating chamber S in the case body 11 side in the state in which the case body 11 and the housing 12 are mated with each other. A wall portion of the defense chamber R2 located in the left-right direction of the vehicle (the axial direction of the fourth gear G4) is formed by the outer wall portion of the case 10. The outer wall portion of the case 10 constituting the defense chamber R2 constitutes a partition wall that separates the defense chamber R2 from the atmosphere.

The inner wall portion W13 and the inner wall portion W23, the inner wall portion W11 and the inner wall portion W21, and the inner wall portion W14 and the outer wall portion of the case 10 constitute the defense chamber forming portions that form the defense chamber R2 together. Therefore, the defense chamber R2 is formed as a cavity surrounded by the defense chamber forming portions. Since the discharge hole 10aa is provided, the defense chamber R2 communicates with the accommodating chamber S via the discharge hole 10aa while being surrounded by the defense chamber forming portions.

The air breather structure 10a further includes an inner wall portion W15, an inner wall portion W16, and an inner wall portion W24. The inner wall portion W15, the inner wall portion W16, and the inner wall portion W24 are provided in the air breather chamber R1. The air breather chamber R1 is configured as a labyrinth chamber, and separates the air and the oil by circulating the air through a labyrinth passage. The labyrinth passage is formed by the inner wall portion W15, the inner wall portion W16, and the inner wall portion W24 which are a plurality of walls alternately provided in the left-right direction in FIGS. 4 and 5 on the case body 11 side and the housing 12 side of the air breather chamber R1. The inner wall portion W15, the inner wall portion W24, and the inner wall portion W16 are disposed side by side in this order in the left-right direction in FIGS. 4 and 5. A portion from the inner wall portion W11 to the inner wall portion W16 corresponds to a first inner wall portion, and a portion from the inner wall portion W21 to the inner wall portion W24 corresponds to a second inner wall portion.

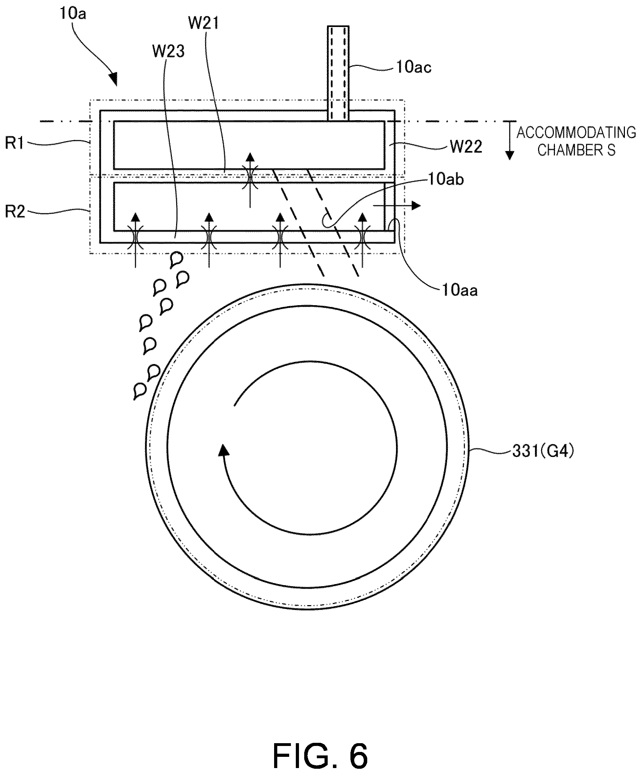

Next, the air breather structure 10a will be further described with reference to FIG. 6.

FIG. 6 is an explanatory view of the air breather structure 10a. In FIG. 6, the air breather structure 10a is schematically shown together with the fourth gear G4 as the third gear portion 331. FIG. 6 is a view of the air breather structure 10a when viewed in the axial direction from the case body 11 side, and corresponds to FIG. 3 or FIG. 5 viewed in the axial direction. In FIG. 6, the up-down direction corresponds to the direction of gravity, and the left-right direction corresponds to the front-rear direction of the vehicle.

The air breather structure 10a further includes a communication hole 10ab and a breather pipe 10ac. The communication hole 10ab allows the air breather chamber R1 to communicate with the accommodating chamber S, and the breather pipe 10ac allows the air breather chamber R1 to communicate with the atmosphere. Therefore, the air breather chamber R1 is provided with the communication hole 10ab as a communication portion communicating with the accommodating chamber S, and the breather pipe 10ac as a communication portion communicating with the atmosphere. The communication hole 10ab corresponds to a first communication portion, and the breather pipe 10ac corresponds to a second communication portion.

Both the communication hole 10ab and the breather pipe 10ac are provided in the housing 12. The communication hole 10ab may be provided in the case body 11, and the same applies to the breather pipe 10ac. The breather pipe 10ac penetrates the outer wall portion of the case 10 from above the air breather chamber R1 and allows the air breather chamber R1 to communicate with the atmosphere.

The communication hole 10ab is provided to bypass the defense chamber R2. Therefore, the communication hole 10ab does not open to the defense chamber R2. The communication hole 10ab extends in the wall portion of the case 10 from the air breather chamber R1 and opens to the accommodating chamber S between the inner wall portion W23 and the fourth gear G4. Regarding the communication hole 10ab, an extension shape and an opening position can be set such that the oil scrapped up by the fourth gear G4 is less likely to enter the air breather chamber R1 via the communication hole 10ab.

For example, the communication hole 10ab extends linearly, and the opening to the accommodating chamber S is provided on the right side in FIG. 6 with respect to the opening to the air breather chamber R1, that is, on the rear side in the rotation direction of an upper half portion of the fourth gear G4. The opening of the communication hole 10ab to the accommodating chamber S is provided behind an upper end of the fourth gear G4 in the rotation direction of the upper half portion of the fourth gear G4. The communication hole 10ab may be bent.

In a state in which the inner wall portion W21 is mated with the inner wall portion W11 on the case body 11 side, the inner wall portion W21 and the inner wall portion W11 come into metal touch with each other, that is, come into metal contact with each other, and no seal member is particularly provided between the inner wall portion W21 and the inner wall portion W11. That is, mating surfaces of the inner wall portion W21 and the inner wall portion W11 are not completely sealed, and a gap is formed between the mating surfaces due to a dimension error, an assembly error, deformation, or the like.

Therefore, the air breather structure 10a has a structure in which the air flows from the defense chamber R2 to the air breather chamber R1 through the gap formed between the mating surfaces of the inner wall portion W21 and the inner wall portion W11, and the air breather chamber R1 and the defense chamber R2 do not communicate with each other through a hole or the like communicating the air breather chamber R1 with the defense chamber R2.

The same gap is also formed between mating surfaces of the inner wall portion W23 and the inner wall portion W13. Therefore, the oil scrapped up by the fourth gear G4 from the accommodating chamber S enters the defense chamber R2 through the gap formed between the mating surfaces. Arrows shown on the inner wall portion W23 together with squeezed drops schematically indicate the oil entering the defense chamber R2 in this manner. In FIG. 6, for convenience of description, the air breather structure 10a is shown to be larger than those in FIGS. 3 and 5, but the same applies to the case in which the air breather structure 10a is provided as shown in FIGS. 3 and 5.

The oil entering the defense chamber R2 is discharged mainly from the defense chamber R2 to the accommodating chamber S through the discharge hole 10aa. That is, since the discharge hole 10aa is provided in the defense chamber R2, even when the oil is accumulated in the defense chamber R2, the accumulated oil is discharged mainly from the defense chamber R2 to the accommodating chamber S through the discharge hole 10aa. The discharge hole 10aa also serves to restrain an increase in an internal pressure of the defense chamber R2. In view of these facts, in the air breather structure 10a, the amount of the oil entering the air breather chamber R1 from the defense chamber R2 through the gap between the inner wall portion W21 and the inner wall portion W11 is reduced. As a result, the discharge of the oil to the atmosphere from the air breather chamber R1 through the breather pipe 10ac is restrained.

The discharge hole 10aa opens to the accommodating chamber S at the position in which the discharge hole 10aa does not face the tooth flank of the fourth gear G4 of the differential gear 30. Therefore, the oil scrapped up by the fourth gear G4 is less likely to enter the defense chamber R2 through the discharge hole 10aa. As a result, the oil entering the defense chamber R2 is restrained, and thus the discharge of the oil to the atmosphere due to the oil entering from the discharge hole 10aa is also restrained from being facilitated.

In the air breather chamber R1, the air is separated from the oil by flowing through the labyrinth passage. The air is discharged from the air breather chamber R1 to the atmosphere through the breather pipe 10ac, and the oil is discharged to the accommodating chamber S through the communication hole 10ab. Therefore, the discharge of the oil to the atmosphere is also restrained by the communication hole 10ab.

The communication hole 10ab is provided such that the oil scrapped up by the fourth gear G4 is less likely to enter the air breather chamber R1 via the communication hole 10ab. Therefore, the discharge of the oil to the atmosphere due to the oil entering from the communication hole 10ab is also restrained from being facilitated.

Next, main functions and effects of the present embodiment will be described.
(1) The air breather structure 10a is provided in the case 10 including the case body 11 and the housing 12 that form the accommodating chamber S in the state of being mated to each other. The air breather structure 10a includes the air breather chamber R1 that is formed as the cavity surrounded by mating the inner wall portion W11 and the inner wall portion W12 and mating the inner wall portion W21 and the inner wall portion W22, and that is provided with the communication hole 10ab communicating with the accommodating chamber S and the breather pipe 10ac communicating with the atmosphere; and the defense chamber R2 that is adjacent to the air breather chamber R1 between the accommodating chamber S and the air breather chamber R1, and that is formed as the cavity surrounded by mating the inner wall portion W13 and the inner wall portion W23.
   With such a configuration, since the defense chamber R2 adjacent to the air breather chamber R1 between the accommodating chamber S and the air breather chamber R1 is provided, the defense chamber R2 serves to restrain the entry of the oil into the air breather chamber R1, and the entry of the oil into the air breather chamber R1 becomes difficult. Further, even when the oil enters into the air breather chamber R1, the entered oil can be discharged to the accommodating chamber S via the communication hole 10ab. Therefore, it is possible to restrain the discharge of the oil from the air breather chamber R1 to the atmosphere.
(2) In the air breather structure 10a, the defense chamber R2 is provided with the discharge hole 10aa for discharging the oil entering into the defense chamber R2 to the accommodating chamber S. With such a configuration, the oil accumulated in the defense chamber R2 can be discharged, and the increase in the internal pressure of the defense chamber R2 can also be restrained. Therefore, the amount of the oil entering the air breather chamber R1 from the defense chamber R2 through the gap between the inner wall portion W21 and the inner wall portion W11 can be reduced, and thus it is possible to restrain the discharge of the oil from the air breather chamber R1 to the atmosphere.
(3) In the air breather structure 10a, the differential gear 30 as the gear mechanism is accommodated in the accommodating chamber S. The discharge hole 10aa opens to the accommodating chamber S at the position in which the discharge hole 10aa does not face the tooth flank of the fourth gear G4 of the differential gear 30. With such a configuration, the oil scrapped up by the fourth gear G4 can be restrained from entering the defense chamber R2 through the discharge hole 10aa. As a result, the oil entering the defense chamber R2 is restrained. Therefore, it is possible to restrain the discharge of the oil from the air breather chamber R1 to the atmosphere by restraining the discharge of the oil to the atmosphere due to the oil entering from the discharge hole 10aa from being facilitated.

The air breather structure 10a may be configured as follows.

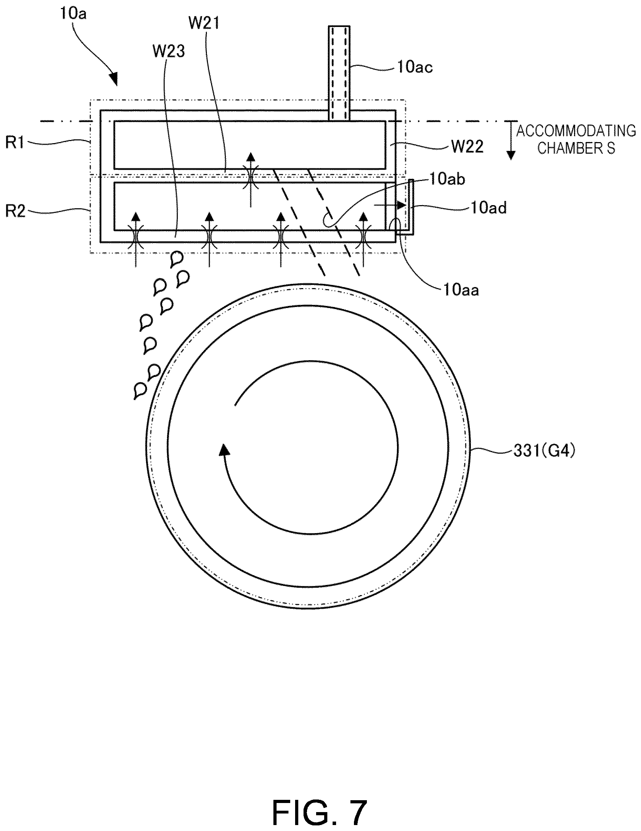

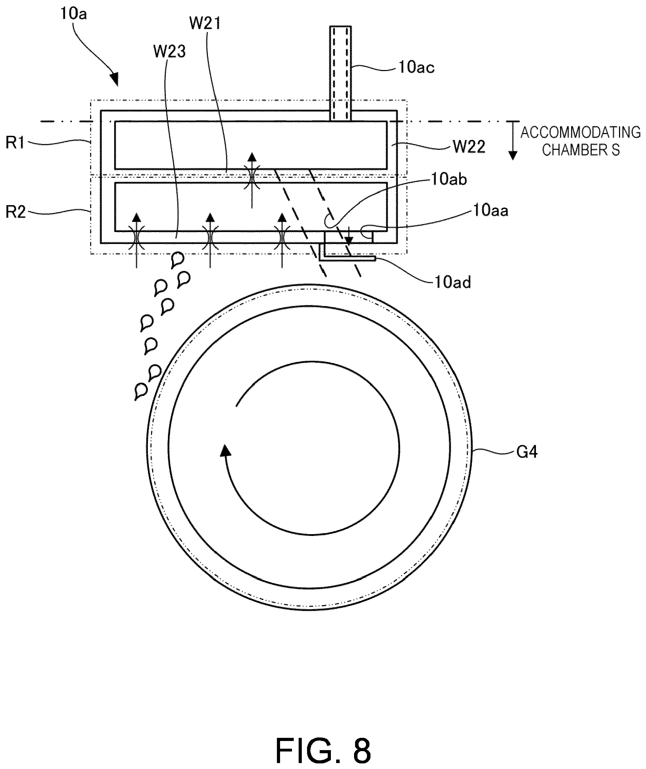

FIG. 7 is a diagram showing a first modification of the air breather structure 10a. FIG. 8 is a diagram showing a second modification of the air breather structure 10a. In the example shown in FIG. 7, the air breather structure 10a further includes a baffle plate 10ad. The baffle plate 10ad is provided with respect to an outlet of the discharge hole 10aa. The baffle plate 10ad is formed of, for example, a rectangular plate member, and is provided on the inner wall portion W23. The baffle plate 10ad is provided at the other end (the right side in FIG. 7) of the inner wall portion W23 in the left-right direction in FIG. 7, extends from the other end in an opening direction (the left-right direction in FIG. 7) of the outlet of the discharge hole 10aa, and then is bent and extends on a discharge hole 10aa side (the upper side in FIG. 7). A portion of the baffle plate 10ad that is bent and extends on the discharge hole 10aa side covers the entire discharge hole 10aa when viewed in the opening direction of the outlet of the discharge hole 10aa. The baffle plate 10ad can be provided to cover at least a part of the discharge hole 10aa.

In the example shown in FIG. 8, the discharge hole 10aa is provided to open to the accommodating chamber S at a position in which the discharge hole 10aa faces the tooth flank of the fourth gear G4. The baffle plate 10ad is provided with respect to the outlet of the discharge hole 10aa provided as described above. Therefore, in this example, the baffle plate 10ad extends in the opening direction (the up-down direction in FIG. 8) of the outlet of the discharge hole 10aa from a lower surface of a portion of the inner wall portion W23 on the left side in FIG. 8 (the front side in the rotation direction of the upper half portion of the fourth gear G4) with respect to the discharge hole 10aa, and then is bent and extends on the discharge hole 10aa side (the right side in FIG. 8). The portion of the baffle plate 10ad that is bent and extends on the discharge hole 10aa side covers the entire discharge hole 10aa when viewed in the opening direction of the outlet of the discharge hole 10aa. In this example, the baffle plate 10ad is preferably provided to cover the entire discharge hole 10aa.

(4) In either case, the oil in the accommodating chamber S is blocked by the baffle plate 10ad provided with respect to the outlet of the discharge hole 10aa, and the oil is prevented from reaching the discharge hole 10aa. Therefore, in these examples, the baffle plate 10ad can further restrain the oil in the accommodating chamber S from entering the defense chamber R2 through the discharge hole 10aa. As a result, in the case of the first modification, it is possible to further restrain the discharge of the oil to the atmosphere due to the oil entering from the discharge hole 10aa from being facilitated. Further, in the case of the second modification, even when the discharge hole 10aa, which opens to the accommodating chamber S at the position in which the discharge hole 10aa faces the tooth flank of the fourth gear G4, is provided, it is possible to restrain the discharge of the oil to the atmosphere due to the oil entering from the discharge hole 10aa from being facilitated.

### DESCRIPTION OF REFERENCE SIGNS

10 case
11 case body (first case member)
12 housing (second case member)
10a air breather structure
10aa discharge hole
10ab communication hole (first communication portion)
10ac breather pipe (second communication portion)
10ad baffle plate
30 differential gear (gear mechanism)
100 power transmission device
G4 fourth gear (gear)
R1 air breather chamber
R2 defense chamber
S accommodating chamber
W11, W12, W13, W14, W15, W16 inner wall portion (first inner wall portion)
W21, W22, W23, W24 inner wall portion (second inner wall portion)

## Claims

1. A case (10),
comprising:
- a first case member (11) and a second case member (12) that form an accommodating chamber (S) in a state of being mated to each other, and
- an air breather structure (10a) in the case (10),
wherein the air breather structure (10a) comprises:
- an air breather chamber (R1):
- that is formed as a cavity surrounded by mating a first inner wall portion (W11, W12, W13, W14, W15, W16) as an inner wall portion of the first case member (11) and a second inner wall portion (W21, W22, W23, W24) as an inner wall portion of the second case member (12), and
- that is provided with a first communication portion (10ab) communicating with the accommodating chamber (S) and a second communication portion (10ac) communicating with the atmosphere; and
- a defense chamber (R2):
- that is adjacent to the air breather chamber (R1) between the accommodating chamber (S) and the air breather chamber (R1), and
- that is formed as a cavity surrounded by mating the first inner wall portion (W11, W12, W13, W14, W15, W16) and the second inner wall portion (W21, W22, W23, W24),
**characterized in that**:
- air flows from the defense chamber (R2) to the air breather chamber (R1) through a gap formed between mating surfaces of the inner wall potion (W11, W12, W13, W14, W15, W16) of the first case member (11) and the inner wall portion (W21, W22, W23, W24) of the second case member (12), and
- the air breather chamber (R1) and the defense chamber (R2) do not communicate with each other through a hole communicating the air breather chamber (R1) with the defense chamber (R2).

2. The case (10) according to claim 1, wherein the defense chamber (R2) is provided with a discharge hole (10aa) for discharging oil entering into the defense chamber (R2) to the accommodating chamber (S).

3. The case (10) according to claim 2, wherein:
- a gear mechanism (30) is accommodated in the accommodating chamber (S), and
- the discharge hole (10aa) opens to the accommodating chamber (S) at a position in which the discharge hole (10aa) does not face a tooth flank of a gear (G4) in the gear mechanism (30).

4. The case (10) to claim 2 or 3, wherein a baffle plate (10ad) for blocking the oil in the accommodating chamber (S) is further provided with respect to an outlet of the discharge hole (10aa).

## Patentansprüche

1. Gehäuse (10),
umfassend:
- ein erstes Gehäuseelement (11) und ein zweites Gehäuseelement (12), die eine Aufnahmekammer (S) in einem Zustand bilden, in dem sie miteinander verbunden sind, und
- eine Entlüftungsstruktur (10a) in dem Gehäuse (10),
wobei die Entlüftungsstruktur (10a) umfasst:
- eine Entlüftungskammer (R1):
- die als ein Hohlraum ausgebildet ist, der durch Verbinden eines ersten Innenwandabschnitts (W11, W12, W13, W14, W15, W16) als ein Innenwandabschnitt des ersten Gehäuseelements (11) und eines zweiten Innenwandabschnitts (W21, W22, W23, W24) als ein Innenwandabschnitt des zweiten Gehäuseelements (12) umgeben ist, und
- die mit einem ersten Verbindungsabschnitt (10ab), der mit der Aufnahmekammer (S) in Verbindung steht, und einem zweiten Verbindungsabschnitt (10ac), der mit der Atmosphäre in Verbindung steht, versehen ist; und
- eine Abwehrkammer (R2):
- die an die Entlüftungskammer (R1) zwischen der Aufnahmekammer (S) und der Entlüftungskammer (R1) angrenzt, und
- die als ein Hohlraum ausgebildet ist, der durch Verbinden des ersten Innenwandabschnitts (W11, W12, W13, W14, W15, W16) und des zweiten Innenwandabschnitts (W21, W22, W23, W24) umgeben ist,
**dadurch gekennzeichnet, dass:**
- Luft von der Abwehrkammer (R2) zu der Entlüftungskammer (R1) durch einen Spalt strömt, der zwischen Verbindungsflächen des Innenwandabschnitts (W11, W12, W13, W14, W15, W16) des ersten Gehäuseelements (11) und des Innenwandabschnitts (W21, W22, W23, W24) des zweiten Gehäuseelements (12) ausgebildet ist, und
- die Entlüftungskammer (R1) und die Abwehrkammer (R2) nicht miteinander durch ein Loch in Verbindung stehen, das die Entlüftungskammer (R1) mit der Abwehrkammer (R2) verbindet.

2. Gehäuse (10) nach Anspruch 1, wobei die Abwehrkammer (R2) mit einem Auslassloch (10aa) zum Auslassen von Öl, das in die Abwehrkammer (R2) eintritt, in die Aufnahmekammer (S) versehen ist.

3. Gehäuse (10) nach Anspruch 2, wobei:
- ein Getriebemechanismus (30) in der Aufnahmekammer (S) untergebracht ist, und
- das Auslassloch (10aa) sich zu der Aufnahmekammer (S) an einer Position öffnet, in der das Auslassloch (10aa) nicht einer Zahnflanke eines Zahnrads (G4) in dem Getriebemechanismus (30) zugewandt ist.

4. Gehäuse (10) nach Anspruch 2 oder 3, wobei eine Prallplatte (10ad) zum Blockieren des Öls in der Aufnahmekammer (S) ferner in Bezug auf einen Auslass des Auslasslochs (10aa) vorgesehen ist.

## Revendications

1. Boîtier (10),
comprenant :
- un premier élément de boîtier (11) et un second élément de boîtier (12) qui forment une chambre de logement (S) dans un état accouplé l'un à l'autre, et
- une structure de reniflard d'air (10a) dans le boîtier (10),
dans laquelle la structure de reniflard d'air (10a) comprend :
- une chambre de reniflard d'air (R1) :
- qui est formée comme une cavité entourée par l'accouplement d'une première partie de paroi interne (W11, W12, W13, W14, W15, W16) en tant que partie de paroi interne du premier élément de boîtier (11) et d'une seconde partie de paroi interne (W21, W22, W23, W24) en tant que partie de paroi interne du second élément de boîtier (12), et
- qui est pourvue d'une première partie de communication (10ab) communiquant avec la chambre de logement (S) et d'une seconde partie de communication (10ac) communiquant avec l'atmosphère ; et
- une chambre de défense (R2) :
- qui est adjacente à la chambre de reniflard d'air (R1) entre la chambre de logement (S) et la chambre de reniflard d'air (R1), et
- qui est formée comme une cavité entourée par l'accouplement de la première partie de paroi interne (W11, W12, W13, W14, W15, W16) et de la seconde partie de paroi interne (W21, W22, W23, W24),
**caractérisée en ce que :**
- l'air s'écoule de la chambre de défense (R2) à la chambre de reniflard d'air (R1) à travers un espace formé entre les surfaces d'accouplement de la partie de paroi interne (W11, W12, W13, W14, W15, W16) du premier élément de boîtier (11) et de la partie de paroi interne (W21, W22, W23, W24) du second élément de boîtier (12), et
- la chambre de reniflard d'air (R1) et la chambre de défense (R2) ne communiquent pas l'une avec l'autre à travers un trou faisant communiquer la chambre de reniflard d'air (R1) avec la chambre de défense (R2).

2. Boîtier (10) selon la revendication 1, dans lequel la chambre de défense (R2) est pourvue d'un trou d'évacuation (10aa) pour évacuer l'huile entrant dans la chambre de défense (R2) vers la chambre de logement (S).

3. Boîtier (10) selon la revendication 2, dans lequel :
- un mécanisme d'engrenage (30) est logé dans la chambre de logement (S), et
- le trou d'évacuation (10aa) s'ouvre sur la chambre de logement (S) à une position dans laquelle le trou d'évacuation (10aa) ne fait pas face à un flanc de dent d'un engrenage (G4) dans le mécanisme d'engrenage (30).

4. Boîtier (10) selon la revendication 2 ou 3, dans lequel une plaque déflectrice (10ad) pour bloquer l'huile dans la chambre de logement (S) est en outre prévue par rapport à une sortie du trou d'évacuation (10aa).
